# EUROPÄISCHE PATENTSCHRIFT

(11) **EP 3 073 059 B1**
(45) Veröffentlichungstag und Bekanntmachung des Hinweises auf die Patenterteilung: **15.08.2018**
(21) Anmeldenummer: 16156031.3
(22) Anmeldetag: 17.02.2016
(51) Int. Cl.: F01D 11/00, F01D 25/16, F01D 25/18, F16J 15/16, F16J 15/3244

(54) **ABGASTURBOLADER**
EXHAUST GAS TURBO CHARGER
TURBOSOUFFLANTE DE GAZ D'ÉCHAPPEMENT

(30) Priorität: 25.03.2015 DE 102015205455
(43) Veröffentlichungstag der Anmeldung: 28.09.2016
(73) Patentinhaber: BMTS Technology GmbH & Co. KG, 70376 Stuttgart (DE)
(72) Erfinder: SCHMITT, Dr. Steffen, 71254 Ditzingen (DE); STESKAL, Michael, 73107 Eschenbach (DE)
(74) Vertreter: BRP Renaud & Partner mbB Rechtsanwälte Patentanwälte Steuerberater

(56) Entgegenhaltungen:
- EP-A2- 1 998 005
- CN-A- 103 032 347
- CN-A- 103 133 064
- DE-A1-102009 041 741
- JP-A- S59 121 261
- US-A- 3 622 164

## Beschreibung

Die vorliegende Erfindung betrifft einen Abgasturbolader mit einer ein Verdichterrad und ein Turbinenrad tragenden Welle gemäß dem Oberbegriff des Anspruchs 1.

Aus der EP 0 184 457 B1 ist ein gattungsgemäßer Abgasturbolader mit einer ein Verdichterrad und ein Turbinenrad tragenden Welle bekannt, wobei die Welle in einem Lagergehäuse gelagert und mit einer Dichteinrichtung an einer Wellendurchführung zwischen Lagergehäuse und Turbinengehäuse bzw. Verdichtergehäuse abgedichtet ist. Die Dichteinrichtung ist in diesem Fall mit Wellendichtringen realisiert.

Aus der DE 10 2009 041 741 A1 ist ein Abgasturbolader mit einer ein Verdichterrad und ein Turbinenrad tragenden Welle bekannt, die in einem Lagergehäuse gelagert ist. Im Bereich des Lagergehäuses ist dabei ein Wellendichtring vorgesehen.

Aus der US 3,622,164 A ist eine Dichteinrichtung bekannt, die eine drehfest mit einer Welle verbundene Schraubengangstruktur aufweist, die in einem ersten Bereich linksdrehend und in einem zweiten Bereich rechtsdrehend ausgebildet ist. Diese beiden Bereiche sind dabei im Bereich einer Wellendurchführung angeordnet.

Aus der EP 1 998 005 A2 ist wiederum ein Abgasturbolader für ein Kraftfahrzeug mit einer in einem Gehäuse gelagerten Welle bekannt, die turbinenseitig ein Turbinenrad und verdichterseitig ein Verdichterrad trägt. Die Welle ist dabei auf der Verdichter- und/oder auf der Turbinenseite direkt oder indirekt über eine jeweils drehfest mit der Welle verbundene Hülse im Gehäuse gelagert.

Aus der CN 103 032 347 A ist eine Schraubengangstruktur mit zwei Bereichen bekannt, wovon der eine linksdrehend und der andere rechtsdrehend ausgebildet ist. Auch aus der CN 103 133 064 A sowie der JP S59121261 A sind gegenläufige Schraubengangstrukturen bekannt.

Generell ist es bekannt zur Abdichtung von Abgasturboladern an der Wellendurchführung zwischen Lagergehäuse und Turbine sowie zwischen Lagergehäuse und Verdichter berührungslose Dichtsysteme zwischen rotierender Welle und feststehendem Gehäuse einzusetzen. Die Abdichtung am Lagergehäuse in Richtung des Turbinengehäuses bzw. des Verdichtergehäuses muss dabei derart ausgeführt werden, dass sie einerseits für sehr hohe Umfangsgeschwindigkeiten geeignet ist und andererseits beidseitig wirkt. Eine beidseitige Wirkung bedeutet in diesem Fall, dass einerseits Öl daran gehindert wird, aus dem Lagergehäuse in Richtung Verdichter bzw. Turbine zu gelangen und andererseits keine Luft von außen in das Lagergehäuse strömen kann. Aufgrund der hohen Relativgeschwindigkeit zwischen rotierender Welle und feststehendem Gehäuse sind deshalb bei Abgasturboladern ausschließlich berührungslose Dichtsysteme einsetzbar.

Die bei Abgasturbolader standardmäßig verwendeten Wellendichtringe weisen bei mittleren und hohen Relativgeschwindigkeiten eine gute Dichtwirkung auf, können jedoch im Stillstand oder auch bei geringen Relativgeschwindigkeiten als triviale Labyrinthdichtung angesehen werden, welche nur eine begrenzte Dichtwirkung besitzt. Tritt beispielsweise Öl aus dem Lagergehäuse in einen Ringspalt zwischen Welle und Lagergehäuse, so besteht zudem die Gefahr, dass es bei stillstehendem oder lediglich mit geringer Drehzahl rotierendem Rotor in einen Labyrinthspalt zwischen feststehendem Wellendichtring und rotierender Welle gelangen und damit zu einer Ölleckage führen kann.

Die vorliegende Erfindung beschäftigt sich daher mit dem Problem, für einen Abgasturbolader der gattungsgemäßen Art eine verbesserte oder zumindest eine alternative Ausführungsform anzugeben, welche sich insbesondere durch eine verbesserte Abdichtung zwischen Lagergehäuse einerseits und Verdichtergehäuse bzw. Turbinengehäuse andererseits auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem Abgasturbolader mit einer ein Verdichterrad und ein Turbinenrad tragenden Welle im Bereich einer Wellendurchführung zwischen Lagergehäuse und Turbinengehäuse bzw. Verdichtergehäuse eine spezielle Dichteinrichtung vorzusehen, welche eine drehfest mit der Welle verbundene Schraubengangstruktur aufweist und dadurch in der Lage ist, ein abzudichtendes Medium, beispielsweise Öl aus dem Lagergehäuse zurück in das Lagergehäuse oder Blowby-Gas aus dem Turbinengehäuse bzw. Luft aus dem Verdichtergehäuse zurück in das Turbinengehäuse bzw. Verdichtergehäuse zu fördern. Dazu ist die Schraubengangstruktur im Bereich einer Wellendurchführung in einem ersten Bereich einer Wellendurchführung links drehend und in einem zweiten Bereich derselben Wellendurchführung rechtsdrehend ausgebildet, oder umgekehrt, wobei beide Bereiche im Bereich einer gemeinsamen Wellendurchführung, das heißt am Übergang vom Lagergehäuse zum Verdichtergehäuse oder am Übergang vom Lagergehäuse zum Turbinengehäuse angeordnet sind. Dies ermöglicht es bei einem Rotieren der Welle sowohl Blowby-Gas zurück in das Turbinengehäuse bzw. Luft zurück in das Verdichtergehäuse, als auch Öl zurück an das Lagegehäuse zu fördern. Die Schraubengangstruktur ist dabei selbstverständlich derart ausgebildet, dass sie ihre fördernde Wirkung nicht nur bei hohen Rotationsgeschwindigkeiten, sondern selbstverständlich auch bei vergleichsweise geringen Rotationsgeschwindigkeiten entfaltet und dadurch eine besonders gute Dichtwirkung über das gesamte Drehzahlspektrum des Abgasturboladers ermöglicht. Mit der erfindungsgemäßen Schraubengangstruktur besteht die Möglichkeit selbst unerwünscht in die Wellendurchführung gelangtes Öl aus dem Lagergehäuse durch eine Rotation des Rotors und damit der Welle wieder zurück in das Lagergehäuse zu fördern, wodurch eine besonders effektive Abdichtung erzielt werden kann.

Bei einer vorteilhaften Weiterbildung der erfindungsgemäßen Lösung ist die Schraubengangstruktur direkt auf einer Außenseite der Welle oder auf einer Außenseite einer auf der Welle drehfest angeordneten Buchse vorgesehen. In beiden Fällen kann jedoch beim Rotieren der Welle eine rückfördernde Wirkung gemäß der Erfindung erzielt werden.

Erfindungsgemäß weist die Dichteinrichtung zumindest einen Wellendichtring auf, der insbesondere zwischen dem ersten und dem zweiten Bereich angeordnet ist. Hierdurch kann eine besonders effektive und dichte Dichteinrichtung geschaffen werden, nämlich über die zwei gegenläufig drehenden Schraubengangstrukturbereiche und den dazwischen angeordneten Wellendichtring. Der Wellendichtring sorgt in bekannter Weise dafür, dass ein Übertritt von Öl aus dem Lagergehäuse in das Turbinen-/Verdichtergehäuse und ein Übertritt von Gas vom Turbinengehäuse/Verdichtergehäuse in das Lagergehäuse wirkungsvoll unterbunden werden kann. Die beiden gegenläufigen Schraubengangstrukturen sorgen zudem bei einer Rotation der Welle dafür, dass Blowby-Gas aus dem zwischen der Welle und dem Lagergehäuse gelegenen Ringraum wieder zurück in das Turbinengehäuse/Verdichtergehäuse und Öl zurück in das Lagergehäuse gefördert wird.

Zweckmäßig weist die Schraubengangstruktur im Querschnitt rechteckförmige, trapezförmige, runde oder ausgerundete Nuten auf. Zwischen den einzelnen Nuten sind dabei die einzelnen Gänge der Schraubengangstruktur angeordnet. Der Querschnitt der Nutform kann dabei insbesondere in Abhängigkeit eines angewandten Fertigungsverfahrens frei gewählt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen Abgasturbolader mit einer Dichteinrichtung gemäß dem Stand der Technik,
- Fig. 2: einen erfindungsgemäßen Rotor des erfindungsgemäßen Abgasturboladers mit einem Turbinenrad, einer Welle und einer dazwischen als Schraubengangstruktur ausgebildeten Dichteinrichtung,
- Fig. 3: eine Darstellung wie in Fig. 2, jedoch auf der Verdichterseite,
- Fig. 4: eine Schnittdarstellung durch einen erfindungsgemäßen Abgasturbolader im Bereich einer Wellendurchführung mit einer eine linksdrehende und eine rechtsdrehende Schraubengangstruktur aufweisenden Dichteinrichtung sowie einem Wellendichtring,
- Fig. 5: unterschiedliche mögliche Nutformen der Schraubengangstruktur.

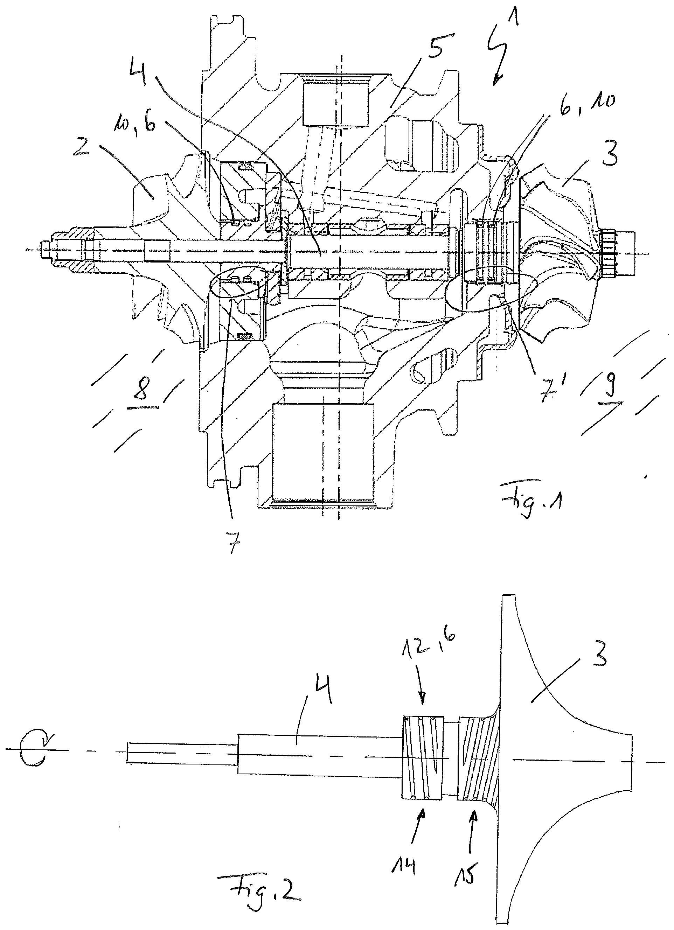

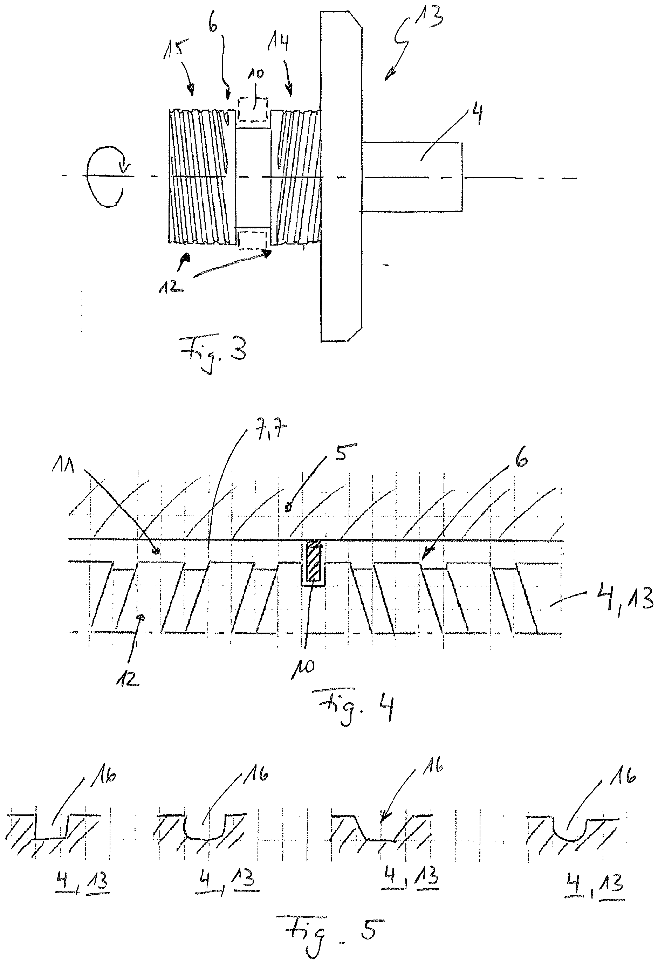

Entsprechend der Fig. 1, weist ein Abgasturbolader 1 eine ein Verdichterrad 2 und ein Turbinenrad 3 tragende Welle 4 auf, die in einem Lagergehäuse 5 gelagert und mit einer Dichteinrichtung 6 im Bereich einer Wellendurchführung 7, 7' abgedichtet ist. Die Wellendurchführung 7 liegt dabei zwischen dem Lagergehäuse 5 und einem Verdichtergehäuse 8, wogegen die Wellendurchführung 7' zwischen dem Lagergehäuse 5 und einem Turbinengehäuse 9 liegt. Sowohl das Verdichtergehäuse 8 als auch das Turbinengehäuse 9 sind dabei nur sehr stark schematisiert dargestellt. Bei dem aus dem Stand der Technik bekannten Abgasturbolader 1 gemäß der Fig. 1 ist dabei die Dichteinrichtung 6 mittels Wellendichtringen 10 realisiert. Eine derartige Dichteinrichtung 6 besitzt jedoch den Nachteil, dass einmal in einen Ringspalt 11 (vgl. Fig. 4) zwischen dem Lagergehäuse 5 und der Welle 4 eingedrungenes Öl nicht mehr entfernt werden kann.

Aus diesem Grund schlägt die Erfindung vor, dass die Dichteinrichtung 6 eine drehfest mit der Welle 4 verbundene Schraubengangstruktur 12 (vgl. Fig. 2 bis 4) besitzt. Dabei kann die Schraubengangstruktur 12 direkt auf der Welle 4 angeordnet sein, wie dies beispielweise gemäß der Fig. 2 dargestellt ist, oder alternativ auf einer Buchse 13, wie dies beispielsweise gemäß der Fig. 3 dargestellt ist.

In den gezeichneten Ausführungsformen der erfindungsgemäßen Schraubengangstruktur 12 besitzt diese jeweils einen ersten Bereich 14, in welchem sie linksdrehend oder rechtsdrehend ausgebildet ist, sowie einen zweiten Bereich 15, in welchem sie gegenläufig, das heißt rechtsdrehend oder linksdrehend ausgebildet ist. Im ersten Bereich 14 ist dabei die Schraubengangstruktur 12 derart ausgebildet bzw. angeordnet, dass sie beim Drehen der Welle 4 bzw. der Buchse 13 eine Rückförderung von in den Ringspalt 11 eingetretenem Öl in das Lagergehäuse 5 bewirkt, wogegen sie im zweiten Bereich 15 derart ausgebildet und angeordnet ist, dass sie beim Drehen der Welle 4 bzw. der Buchse 13 eine Rückförderung von Blowby-Gas/Luft in das Turbinengehäuse 9 bzw. das Verdichtergehäuse 8 bewirkt. Selbstverständlich kann die Schraubengangstruktur 12 alternativ auch derart ausgebildet sein, dass sie ausschließlich linksdrehend oder rechtsdrehend ausgebildet ist und dadurch beispielsweise ausschließlich eine Rückförderung von Öl in das Lagergehäuse 5 ermöglicht. Dies könnte jedoch dazu führen, dass in unerwünschter Weise Blowby-Gas aus dem Turbinengehäuse 9 in das Lagergehäuse 5 befördert wird, so dass die bevorzugte Ausführungsform der Schraubengangstruktur 12 mit zwei gegenläufigen Bereichen 14, 15 gewählt wird.

Um die Dichtwirkung im Bereich der Wellendurchführung 7, 7' weiter erhöhen zu können, kann zusätzlich ein Wellendichtring 10 vorgesehen werden, der insbesondere zwischen zwei gegenläufigen Schraubengangstrukturen 12, das heißt zwischen den beiden Bereichen 14, 15 angeordnet ist, wie dies beispielsweise gemäß der Fig. 4 dargestellt ist. Die einzelnen Nuten 16 der Schraubengangstrukturen 12 können dabei einen rechteckförmigen Querschnitt aufweisen (vgl. linke Darstellung in Fig. 5), einen ausgerundeten Querschnitt (vgl. zweit linke Darstellung in Fig. 5), einen trapezförmigen Querschnitt (vgl. zweit rechte Darstellung in Fig. 5) oder einen runden bzw. halbrunden Querschnitt (vgl. rechte Darstellung in Fig. 5).

Mit der erfindungsgemäßem als Schraubengangstruktur 12 ausgebildeten Dichteinrichtung 6 lässt sich eine besonders effektive Abdichtung einer Wellendurchführung 7, 7' bei gleichzeitig geringen Fertigungs- und Montagekosten erreichen. Durch die Kombination mit einem bekannten Wellendichtring 10 kann die Dichtwirkung zusätzlich gesteigert werden.

## Patentansprüche

1. Abgasturbolader (1) mit einer ein Verdichterrad (2) und ein Turbinenrad (3) tragenden Welle (4), die in einem Lagergehäuse (5) gelagert ist und mit einer Dichteinrichtung (6) zum Abdichten einer Wellendurchführung (7,7') zwischen Lagergehäuse (5) und Verdichtergehäuse (8) bzw. Turbinengehäuse (9) **dadurch gekennzeichnet, dass**
- die Dichteinrichtung (6) eine drehfest mit der Welle (4) verbundene Schraubengangstruktur (12) aufweist, die in einem ersten Bereich (14) linksdrehend und in einem zweiten Bereich (15) rechtsdrehend ausgebildet ist, oder umgekehrt, wobei beide Bereiche (14,15) im Bereich der Wellendurchführung (7) oder der Wellendurchführung (7') angeordnet sind,
- die Schraubengangstruktur (12) derart ausgebildet und angeordnet ist, dass sie beim Drehen der Welle (4) eine Rückförderung von Öl in das Lagergehäuse (5) bewirkt,
- die Schraubengangstruktur (12) derart ausgebildet und angeordnet ist, dass sie beim Drehen der Welle (4) eine Rückförderung von Blowby-Gas/Luft in das Turbinengehäuse/Verdichtergehäuse (9,8) bewirkt,
- die Dichteinrichtung (6) zumindest einen Wellendichtring (10) aufweist,
- zumindest ein Wellendichtring (10) zwischen dem ersten und dem zweiten Bereich (14,15) angeordnet ist.

2. Abgasturbolader nach Anspruch 1,
**dadurch gekennzeichnet,**
**dass** die Schraubengangstruktur (12) direkt auf einer Außenseite der Welle (4) oder auf einer Außenseite einer auf der Welle (4) drehfest angeordneten Buchse (13) vorgesehen ist.

3. Abgasturbolader nach einem der Ansprüche 1 oder 2,
**dadurch gekennzeichnet,**
**dass** die Schraubengangstruktur (12) im Querschnitt rechteckförmige Nuten (16) aufweist.

4. Abgasturbolader nach einem der Ansprüche 1 oder 2,
**dadurch gekennzeichnet,**
**dass** die Schraubengangstruktur (12) im Querschnitt trapezförmige Nuten (16) aufweist.

5. Abgasturbolader nach einem der Ansprüche 1 oder 2,
**dadurch gekennzeichnet,**
**dass** die Schraubengangstruktur (12) im Querschnitt runde oder ausgerundete Nuten (16) aufweist.

## Claims

1. Exhaust gas turbo charger (1) comprising a shaft (4) supporting a compressor wheel (2) and a turbine wheel (3), which shaft is mounted in a bearing housing (5), and comprising a sealing device (6) for sealing a shaft feedthrough (7, 7') between the bearing housing (5) and compressor housing (8) or turbine housing (9),
**characterised in that**
- the sealing device (6) has a screw thread structure (12) connected in a rotationally secure manner to the shaft (4), which is designed to be left-turning in a first section (14) and right-turning in a second section (15), or vice versa, wherein both sections (14, 15) are arranged in the area of the shaft feedthrough (7) or shaft feedthrough (7'),
- the screw thread structure (12) is designed and arranged such that when rotating the shaft (4) it causes the return feed of oil into the bearing housing (5),
- the screw thread structure (12) is designed and arranged such that when rotating the shaft (4) it causes the return feed of gas/air blowby into the turbine housing/compressor housing (9, 8),
- the sealing device (6) comprises at least one shaft sealing ring (10),
- at least one shaft sealing ring (10) is arranged between the first and the second section (14, 15).

2. Exhaust gas turbo charger according to claim 1,
**characterised in that**
the screw thread structure (12) is provided directly on an outer side of the shaft (4) or on an outer side of a socket (13) arranged on the shaft (4) in a rotationally secure manner.

3. Exhaust gas turbo charger according to any of claims 1 or 2,
**characterised in that**
in cross-section the screw thread structure (12) has rectangular grooves (16).

4. Exhaust gas turbo charger according to any of claims 1 or 2,
**characterised in that**
in cross-section the screw thread structure (12) has trapezoidal grooves (16).

5. Exhaust gas turbo charger according to any of claims 1 or 2,
**characterised in that**
in cross-section the screw thread structure (12) has round or rounded grooves (16).

## Revendications

1. Turbosoufflante de gaz d'échappement (1) avec un arbre (4) portant une roue de compresseur (2) et une roue de turbine (3), qui est logé dans un boîtier de palier (5) et avec un dispositif étanche (6) pour rendre étanche un passage d'arbre (7, 7') entre le boîtier de palier (5) et le boîtier de compresseur (8) ou boîtier de turbine (9), **caractérisée en ce que**
- le dispositif étanche (6) présente une structure de pas de vis (12) raccordée de manière solidaire en rotation à l'arbre (4) qui est réalisée dans une première zone (14) tournant à gauche et dans une seconde zone (15) tournant à droite, ou inversement, dans lequel les deux zones (14, 15) sont agencées dans la zone du passage d'arbre (7) ou du passage d'arbre (7'),
- la structure de pas de vis (12) est réalisée et agencée de manière à provoquer lors de la rotation de l'arbre (4) un refoulement d'huile dans le boîtier de palier (5),
- la structure de pas de vis (12) est réalisée et agencée de manière à provoquer lors de la rotation de l'arbre (4) un refoulement de gaz de contournement de piston/d'air dans le boîtier de turbine/boîtier de compresseur (9, 8),
- le dispositif étanche (6) présente au moins un anneau étanche d'arbre (10),
- au moins un anneau étanche d'arbre (10) est agencé entre la première et la seconde zone (14, 15).

2. Turbosoufflante de gaz d'échappement selon la revendication 1,
**caractérisée en ce**
**que** la structure de pas de vis (12) est prévue directement sur un côté extérieur de l'arbre (4) ou sur un côté extérieur d'une douille (13) agencée sans pouvoir tourner sur l'arbre (4).

3. Turbosoufflante de gaz d'échappement selon l'une quelconque des revendications 1 ou 2,
**caractérisée en ce**
**que** la structure de pas de vis (12) présente des rainures (16) de section transversale rectangulaire.

4. Turbosoufflante de gaz d'échappement selon l'une quelconque des revendications 1 ou 2,
**caractérisée en ce**
**que** la structure de pas de vis (12) présente des rainures (16) de section transversale trapézoïdale.

5. Turbosoufflante de gaz d'échappement selon l'une quelconque des revendications 1 ou 2,
**caractérisée en ce**
**que** la structure de pas de vis (12) présente des rainures (16) de section transversale ronde ou arrondie.
